**Europäisches Patentamt**

**European Patent Office**

**Office européen des brevets**

(19)

(11) Veröffentlichungsnummer : **0 353 385 B1**

(12) **EUROPÄISCHE PATENTSCHRIFT**

(45) Veröffentlichungstag der Patentschrift :
**08.07.92 Patentblatt 92/28**

(51) Int. Cl.⁵ : **B23B 31/20**

(21) Anmeldenummer : **89106004.8**

(22) Anmeldetag : **06.04.89**

(54) **Spannzange.**

(30) Priorität : **02.08.88 DE 8809841 U**

(43) Veröffentlichungstag der Anmeldung :
**07.02.90 Patentblatt 90/06**

(45) Bekanntmachung des Hinweises auf die
Patenterteilung :
**08.07.92 Patentblatt 92/28**

(84) Benannte Vertragsstaaten :
**BE CH DE ES FR GB IT LI SE**

(56) Entgegenhaltungen :
**DE-A- 2 658 929**
**US-A- 3 026 116**

(73) Patentinhaber : **Röhm, Günter Horst**
**Heinrich-Röhm-Strasse 50**
**W-7927 Sontheim (DE)**

(72) Erfinder : **Röhm, Günter Horst**
**Heinrich-Röhm-Strasse 50**
**W-7927 Sontheim (DE)**

(74) Vertreter : **Fay, Hermann, Dipl.-Phys. Dr. et al**
**Ensingerstrasse 21 Postfach 1767**
**W-7900 Ulm (Donau) (DE)**

EP 0 353 385 B1

## Beschreibung

Die Erfindung betrifft eine Spannzange, bei der eine in einem Zangengehäuse axial verschiebbar geführte Zangenhülse mit einer Konusfläche einen entsprechend konisch ausgebildeten radial elastisch zusammendrückbaren Zangenkörper umschließt, der in Richtung der Konuserweiterung axial an einem Stirndeckel abgestützt ist, der die Zangenhülse radial übergreift und am Zangengehäuse gehalten ist.

Bei aus der DE-A-26 58 929 bekannten Spannzangen dieser Art ist der Stirndeckel auf dem Zangengehäuse in einem Gewinde gehalten, so daß der Stirndeckel zum Wechseln des Zangenkörpers ab- und wieder aufgeschraubt werden muß, was nicht nur umständlich und zeitaufwendig, sondern auch ein Arbeitsvorgang ist, der nicht leicht automatisiert werden kann, so daß ein maschineller Wechsel des Zangenkörpers schwierig ist.

Aus der US-A-3 026 116 ist eine Spannzange anderen Aufbaus, nämlich ohne eine den Spannvorgang des Zangenkörpers bewirkende Zangenhülse bekannt. Die Betätigung des Zangenkörpers erfolgt durch Verdrehen eines Spannringes in einem Spanngewinde auf dem Zangenkörper. Am Spannring ist über einen Bajonettverschluß eine Kappe eingehängt, an der sich der Zangenkörper axial abstützt. Wird der Spannring verdreht, wird je nach Drehrichtung über die Kappe der Zangenkörper gespannt oder gelockert. Eine Rastvorrichtung dient zur Mitnahme der Kappe beim Verdrehen des Spannrings, wenn die Spannzange geöffnet wird, kann aber nicht ausschließen, daß die Kappe sich bei geschlossener Spannzange unbeabsichtigt gegenüber dem Spannring verdrehen und dadurch die Spannzange öffnen kann.

Der Erfindung liegt die Aufgabe zugrunde, eine Spannzange der eingangs genannten Art so auszubilden, daß der Stirndeckel einfach und schnell gelöst und zuverlässig wieder befestigt werden kann und im Ergebnis ein maschineller Wechsel des Zangenkörpers in einfacher Weise möglich ist.

Diese Aufgabe wird bei einer Spannzange der eingangs genannten Art dadurch gelöst, daß der Stirndeckel einen den Rand des Zangengehäuses übergreifenden Kragen aufweist, der radial einwärts vorstehende Nokken trägt, die mit axialem Spiel des Stirndeckels in eine Ringnut in der Wand des Zangengehäuses fassen, wobei diese Wand axial vom Rand aus in der Ringnut mündende Passagen aufweist, durch die hindurch die Nocken in die Ringnut ein- bzw. aus ihr austreten können, und daß wenigstens einer der Nocken einen gegen den Stirndeckel axial vorstehenden Vorsprung aufweist, der mit einer höchstens dem axialen Spiel entsprechenden Tiefe in Aufnahmen am Zangengehäuse greift, wobei der Vorsprung durch eine auf den Stirndeckel wirkende Federkraft in der Aufnahme gehalten und nur durch Zurückdrücken des Stirndeckels aus der Aufnahme lösbar ist.

Die durch die Passagen in die Ringnut einführbaren Nocken bilden im wesentlichen einen Bajonettverschluß, bei dem die in Drehrichtung formschlüssig in die Aufnahmen vorstehenden Vorsprünge den Stirndeckel in seiner Schließstellung zuverlässig sichern, und zwar auch dann, wenn die Spannzange offen ist, der Zangenkörper also nicht axial gegen den Stirndeckel angedrückt ist. Der Bajonettverschluß kann einfach und schnell betätigt und die Betätigung unschwer maschinell ausgeführt werden.

In bevorzugter Ausführungsform sind zur Erzeugung der Federkraft federbelastete Druckstücke vorgesehen, die axial verschiebbar in der Wand des Zangengehäuses geführt sind und axial gegenüber den Passagen in die Ringnut vorsteht. Ihre Anordnung axial gegenüber den Passagen ermöglicht einen vorteilhaften geringen Baudurchmesser des Zangengehäuses und des Stirndeckels. Zweckmäßig sind die Vorsprünge von in die Nocken eingesetzten Fixierstiften und die Aufnahmen von entsprechend halbschaligen Ausnehmungen gebildet. Wenn insbes. vier Nocken über den Umfang des Stirndeckels gleichmäßig verteilt angeordnet sind, sind zweckmäßig die federbelastete Druckstücke und die Aufnahmen um 45° gegeneinander längs des Umfangs versetzt.

Im folgenden wird die Erfindung an einem in der Zeichnung dargestellten Ausführungsbeispiel näher erläutert; es zeigen:

Fig. 1 einen Axialschnitt durch eine Spannzange nach der Erfindung in Richtung des in Fig. 2 eingetragenen Schnittes I - I,

Fig. 2 den Schnitt II - II in Fig. 1,

Fig. 3 eine Stirnansicht der Spannzange nach Fig. 1.

Bei der in der Zeichnung dargestellten Spannzange ist das Zangengehäuse mit 1 bezeichnet. Es besitzt einen Flansch 2 zur Befestigung an der Maschinenspindel einer Drehmaschine. Im Zangengehäuse 1 ist eine Zangenhülse 3 axial verschiebbar geführt, die an eine lediglich gestrichelt angedeutete Spannstange 4 anschließbar ist, die im Innern der nicht dargestellten Maschinenspindel geführt ist. Mit Hilfe der Spannstange 4 kann die Zangenhülse 3 im Zangengehäuse 1 axial verschoben, insbesondere axial vorgeschoben werden, im die Spannzange zu spannen. Dazu umschließt die Zangenhülse 3 mit einer Konusfläche 5 einen entsprechend konisch ausgebildeten Zangenkörper 6, der durch axiale Längsschlitze 7 radial elastisch zusammendrückbar ist. Wird die Zangenhülse 3 in Richtung der Konuserweiterung verschoben, wird der Zangenkörper

2

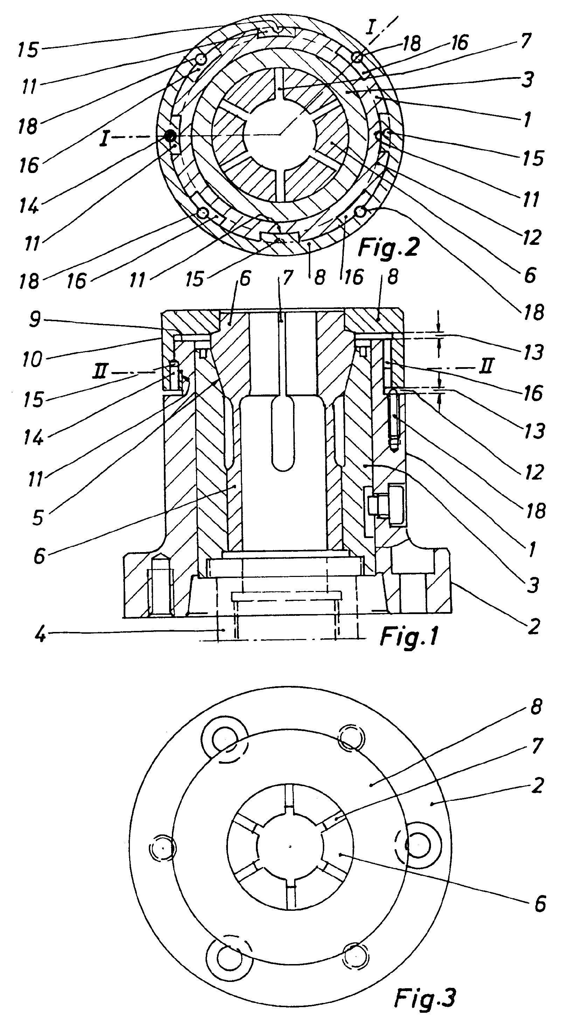

6 zusammengedrückt, so daß die Spannzange schließt. Dabei ist der Zangenkörper 6 in Richtung der Konuserweiterung axial an einem ringförmigen Stirndeckel 8 abgestützt, der die Zangenhülse 3 radial übergreift und am Zangengehäuse 1 gehalten ist. Im einzelnen weist dazu der Stirndeckel 8 einen den Rand 9 des Zangengehäuses 1 übergreifenden Kragen 10 auf, der radial einwärts vorstehende Nocken 11 trägt, von welchen vier gleichmäßig verteilt über den Umfang vorgesehen sind, so daß der Zentriwinkel zwischen aufeinanderfolgenden Nocken 90° beträgt. Die Nocken 11 fassen in eine Ringnut 12 in der Wand des Zangengehäuses 1, wobei der Stirndeckel 8 ein in der Zeichnung mit 13 bezeichnetes axiales Spiel besitzt, das somit einmal zwischen dem Rand 9 des Zangengehäuses 1 und dem Stirndeckel 8 und zum anderen zwischen der axial rückwärtigen Wand der Ringnut 12 und dem ihr gegenüber liegenden Rand des Kragens 10 besteht. Der Stirndeckel 8 steht dabei unter einer Federkraft, so daß er durch die Federkraft in der in Fig. 1 dargestellten axial vorderen Lage gehalten ist. Dabei besitzt einer der Nocken 11 einen gegen den Stirndeckel 8 axial vorstehenden Vorsprung 14, der unter der auf den Stirndeckel 8 wirkenden Federkraft mit einer höchstens dem axialen Spiel 13 entsprechenden Tiefe in eine Aufnahme 15 am Zangengehäuse 1 eingerastet ist. Diese Aufnahmen 15 sind ebenfalls zu viert gleichmäßig verteilt über den Umfang des Zangengehäuses 1 vorgesehen. Weiter befinden sich in der Wand des Zangengehäuses 1 axial vom Rand 9 aus in der Ringnut 12 mündende Passagen 16, durch die hindurch die Nocken 11 in die Ringnut 12 ein- bzw. aus ihr austreten können, wenn der Stirndeckel 8 am Zangengehäuse 1 axial aufgesetzt, bzw. abgenommen werden soll. Im Ergebnis bilden die Nocken 11 mit der Ringnut 12 einen Bajonettverschluß des Stirndeckels 8 am Zangengehäuse 1, wobei durch die Federkraft der Vorsprung 14 in der Aufnahme 15 und damit der Stirndeckel 8 in seiner Schließstellung auch dann gesichert wird, wenn die Spannzange offen, also der Zangenkörper 6 nicht axial gegen den Stirndeckel 8 gedrückt wird.

Zur Erzeugung der Federkraft sind federbelastete Druckstücke 18 vorgesehen, die axial verschiebbar in der Wand des Zangengehäuses 1 geführt sind und axial gegenüber den Passagen 16 in die Ringnut 12 vorstehen. Die Vorsprünge 14 sind von in die Nocken 11 eingesetzten Fixierstiften und die Aufnahmen 15 von halbzylinderschaligen Ausnehmungen gebildet. Die federbelastete Druckstücke 18 und die Aufnahmen 15 sind um 45° gegeneinander längs des Umfangs versetzt, so daß der Schließ- bzw. Öffnungswinkel, um den der Stirndeckel 8 zum Schließen bzw. Öffnen verdreht werden muß, 45° beträgt.

Zum Abnehmen des Stirndeckels 8 wird dieser axial gegen die Druckstücke 18 zurückgedrückt. Dadurch löst sich der Vorsprung 14 aus seiner Aufnahme 15, so daß der Stirndeckel 8 frei drehbar wird. Er wird um 45° gedreht, wodurch die Nocken 11 des Stirndeckels 8 auf die Passagen 16 im Zangengehäuse 1 treffen. In dieser Stellung kann der Stirndeckel 8 axial vom Zangegehäuse 1 abgezogen werden. In der Schließstellung dienen die federnden Druckstücke 18 zur Sicherung des Stirndeckels 8 vor unbeabsichtigtem Verdrehen in entspannter Zangenstellung, da die Druckstücke den Vorsprung 14 in seine Aufnahme 15 drücken und darin festhalten.

**Patentansprüche**

1. Spannzange, bei der eine in einem Zangengehäuse (1) axial verschiebbar geführte Zangenhülse (3) mit einer Konusfläche (5) einen entsprechend konisch ausgebildeten, radial elastisch zusammendrückbaren Zangenkörper (6) umschließt, der in Richtung der Konuserweiterung axial an einem Stirndeckel (8) abgestützt ist, der die Zangenhülse (3) radial übergreift und am Zangengehäuse (1) gehalten ist, dadurch gekennzeichnet, daß der Stirndeckel (8) einen den Rand (9) des Zangengehäuses (1) übergreifenden Kragen (10) aufweist, der radial einwärts vorstehende Nocken (11) trägt, die mit axialem Spiel (13) des Stirndeckels (8) in eine Ringnut (12) in der Wand des Zangengehäuses (1) fassen, wobei diese Wand axial vom Rand (9) aus in der Ringnut (12) mündende Passagen (16) aufweist, durch die hindurch die Nocken (11) in die Ringnut (12) ein- bzw. aus ihr austreten können, und daß wenigstens einer der Nocken (11) einen gegen den Stirndeckel (8) axial vorstehenden Vorsprung (14) aufweist, der mit einer höchstens dem axialen Spiel (13) entsprechenden Tiefe in Aufnahmen (15) am Zangengehäuse (1) greift, wobei der Vorsprung (14) durch eine auf den Stirndeckel (8) wirkende Federkraft in der Aufnahme (14) gehalten und nur durch Zurückdrücken des Stirndeckels (8) aus der Aufnahme (15) lösbar ist.

2. Spannzange nach Anspruch 1, dadurch gekennzeichnet, daß zur Erzeugung der Federkraft federbelastete Druckstücke (18) vorgesehen sind, die axial verschiebbar in der Wand des Zangengehäuses (1) geführt sind und axial gegenüber den Passagen (16) in die Ringnut (12) vorstehen.

3. Spannzange nach Anspruch 1 oder 2, dadurch gekennzeichnet, daß die Vorsprünge (14) von in die Nokken (11) eingesetzten Fixierstiften und die Aufnahmen (15) von entsprechenden halbschaligen Ausnehmungen gebildet sind.

4. Spannzange nach den Ansprüchen 2 und 3, dadurch gekennzeichnet, daß die federbelasteten Druckstücke (18) und die Aufnahmen (15) um 45° gegeneinander längs des Umfangs versetzt sind, wenn vier Nocken

3

EP 0 353 385 B1

(11) über den Umfang des Stirndeckels (8) gleichmäßig verteilt sind.

**Claims**

1. A collet wherein a collet sleeve (3) which is axially displaceably guided in a collet housing (1) and which has a conical surface (5) embraces a radially resiliently compressible collet body (6) which is of a correspondingly conical configuration and which is axially supported in the direction of enlargement of the conical configuration against an end cover (8) which radially engages over the collet sleeve (3) and is held to the collet housing (1), characterised in that the end cover (8) has a collar (10) which engages over the edge (9) of the collet housing (1) and which carries radially inwardly projecting projections (11) which with axial play (13) for the end cover (8) engage into an annular groove (12) in the wall of the collet housing (1), wherein said wall has passages (16) which open axially from the edge (9) in the annular groove (12) and through which the projections (11) can pass into and out of the annular groove (12), and that at least one of the projections (11) has a projection portion (14) which projects axially towards the end cover (8) and which engages by a depth corresponding at most to the axial play (13) in receiving means (15) on the collet housing (1), wherein the projection portion (14) is held in the receiving means (15) by a spring force acting on the end cover (8), and is releasable from the receiving means (15) only by pressing the end cover (8) back.

2. A collet according to claim 1 characterised in that spring-loaded pressure portions (18) are provided to produce the spring force, the pressure portions being axially displaceably guided in the wall of the collet housing (1) and projecting axially relative to the passages (16) into the annular groove (12).

3. A collet according to claim 1 or claim 2 characterised in that the projection portions (14) are formed by fixing pins which are fitted into the projections (11) and the receiving means (15) are formed by corresponding half-shell recesses.

4. A collet according to claims 2 and 3 characterised in that the spring-loaded pressure portions (18) and the receiving means (15) are displaced through 45° relative to each other around the periphery when four projections (11) are uniformly distributed around the periphery of the end cover (8).

**Revendications**

1. Pince de serrage dans laquelle une douille de pince (3) guidée de manière mobile dans le sens axial dans un boîtier de pince (1) et présentant une surface conique (5) enveloppe un corps de pince (6) ayant une forme conique correspondante et pouvant être comprimé élastiquement dans le sens radial qui s'appuie axialement, en direction de l'élargissement du cône, sur un couvercle frontal (8) lequel recouvre radialement la douille de pince (3) et est maintenu sur le boîtier de pince (1), caractérisée par le fait que le couvercle frontal (8) comporte un collet (10) recouvrant le bord (9) du boîtier de pince (1) et portant des ergots (11) dépassant radialement vers l'intérieur qui s'engagent avec un jeu axial (13) du couvercle frontal (8) dans une gorge annulaire (12) ménagée dans la paroi du boîtier de pince (1), ladite paroi comportant des passages (16) qui, à partir du bord (9), débouchent axialement dans la gorge annulaire (12) et par lesquels les ergots (11) peuvent s'engager dans la gorge annulaire (12) et respectivement sortir de celle-ci, et qu'au moins l'un des ergots (11) présente une saillie (14) dépassant axialement en direction du couvercle frontal (8) et s'engageant sur une profondeur correspondant au maximum au jeu axial (13), dans des logements (15) sur le boîtier de pince (1), la saillie (14) étant maintenue dans le logement (15) par une force de ressort agissant sur le couvercle frontal (8) et ne pouvant être dégagée du logement (15) qu'en repoussant le couvercle frontal (8).

2. Pince de serrage selon la revendication 1, caractérisée par le fait que pour la génération de la force de ressort sont prévus des membres de pression (18) commandés par ressort qui sont guidés de manière axialement mobile dans la paroi du boîtier de pince (1) et qui dépassent, axialement en face des passages (16), dans la gorge annulaire (12).

3. Pince de serrage selon l'une des revendications 1 ou 2, caractérisée par le fait que les saillies (14) sont constituées par des goujons d'assemblage insérés dans les ergots (11), et les logements (15), par des évidements conjugués conformés en demi-coquilles.

4. Pince de serrage selon les revendications 2 et 3, caractérisée par le fait que les membres de pression (18) commandés par ressort et les logements (15) sont décalés de 45° les uns par rapport aux autres le long de la périphérie lorsque quatre ergots (11) sont répartis uniformément sur la périphérie du couvercle frontal (8).

4

Fig.2

Fig.1

Fig.3